Europäisches Patentamt

European Patent Office

Office européen des brevets

(11) Publication number: **0 194 769 B1**

## EUROPEAN PATENT SPECIFICATION

(45) Date of publication of patent specification: **06.05.92**   (51) Int. Cl.5: **H04N 7/16**, H04L 9/00

(21) Application number: **86301211.8**

(22) Date of filing: **20.02.86**

(54) **Cryptographic system for a direct broadcast by satellite network.**

(30) Priority: **11.03.85 US 710385**

(43) Date of publication of application:
**17.09.86 Bulletin  86/38**

(45) Publication of the grant of the patent:
**06.05.92 Bulletin  92/19**

(84) Designated Contracting States:
**BE CH DE FR GB IT LI NL SE**

(56) References cited:
**EP-A- 0 123 360**
**WO-A-83/01881**
**WO-A-85/00718**
**US-A- 4 447 828**

(73) Proprietor: **GENERAL INSTRUMENT CORPO-
RATION**
**767 Fifth Avenue**
**New York New York 10153(US)**

(72) Inventor: **Horne, Donald R.**
**20 Edgecliff Golfway 403**
**Don Mills Ontario(CA)**
Inventor: **Jeffers, John M.**
**141 Shaftesbury Street**
**3 Downsview Ontario M3A 5M3(CA)**

(74) Representative: **Allam, Peter Clerk et al**
**LLOYD WISE, TREGEAR & CO. Norman
House 105-109 Strand
London WC2R 0AE(GB)**

**Description**

The present invention is generally concerned with information distribution in which information in encrypted form is sent from a transmitter or sender node to a plurality of receiver nodes at which the encrypted information is decrypted to provide the information in clear. Such information distribution may be found in subscribers' networks where only authorised subscribers are to be allowed access to the information. In a subscribers' network in which the distribution of information, for example television programming, is done by direct broadcasting by satellite (DBS), the distribution of encrypted information affords a means of discriminating between subscribers and non-subscribers who may have receiver units capable of receiving the satellite transmission but who should be prevented from having free access to the programme content. Thus security of transmission becomes particularly important in DBS and has led to arrangements for controlling access by individual subscribers as will be discussed below.

Our copending European Patent Application EP-A-0179612, published on 30.04.1986 discloses arrangements for encryption and decryption of information, particularly for television programmes distributed in a DBS service to subscribers. An important feature of the arrangements is the use of a master key to aid in maintaining security of the subscriber service. A master key is also used in the implementation of the present invention as will be described below.

The present invention relates to a system for sending encrypted information from a transmission mode to a receiver node; a receiver for use as a receiver node, and to a network of such receivers and of the sending system and such receivers; and to a method of distributing information from a transmitter node to a receiver node.

The availability of small, low-cost television receive-only terminals in recent years his resulted in an increasing demand for direct broadcast satellite services. Such services include Pay TV, tele-conferencing, tele-seminar, private broadcast networks, and the like.

Unlike land lines and terrestrial microwave links, satellite transmissions lack privacy. Such transmissions can be received by any TV receive-only terminal whose antenna is situated to receive the satellite signals. Accordingly, the secure transmission of video and audio programming and data signals is required to provide the privacy essential to many applications.

A simple example of a direct broadcast satellite network in which security is required is one which broadcasts television signals to paying subscribers. Since any receiver having an antenna in the broadcast signal area can receive the satellite signals, it is necessary that the signals be encoded in a way which can be decoded only by subscribers' receivers. Certain subscribers may have paid for certain programs or program groups, whereas others may have paid for other programs or program groups. The signals must then be further encoded such that subscribers who have paid for particular programs or groups of programs can receive same, while other subscribers cannot.

The broadcast of television programmes by satellite transmission in encrypted form from a transmitter node to a receiver node is described in International Application under the Patent Cooperation Treaty published under the Number WO83/01881 (Communications Satellite Corporation). The encryption scheme proposed in this specification involves the provision at the transmitter node of a first encryption stage in which the information in clear is encrypted with a pseudo-random number sequence. The sequence is seeded by combination of a random number generator and an encrypting key generator whose key is changed periodically, say once per month. the random number component is changed frequently. The random number is also encrypted with this key and distributed to the receiver nodes. The key is also encrypted with individual user ID codes and sent via mail or the satellite to the receiver nodes which also store their respective user ID codes to enable a deciphering sequence leading to recovery of the pseudo-random number sequence for decryption of the received encrypted information.

Each receiver requires two decryption stages to obtain the pseudo-random number sequence for decryption of the received encrypted information. In addition each key used at the transmitter is stored in or is reproduced at the receiver during the decryption procedure. Our copending above mentioned application EP-A-0 179 612 discloses arrangements in which a master key is employed which is neither stored in nor reproduced at the receivers and only one decryption stage is required to recover a common key for decoding the received encrypted information.

The preferred embodiment of the present invention described below retains these features and the teaching of the present invention is used to provide additional arrangements aimed at reducing still further the risk of unauthorized decoding of the encrypted signals.

According to one aspect of the present invention there is provided a sending system for sending encrypted information from a transmission node to a receiver node, comprising:

means for generating a common key for use in encrypting information to be sent, said common key comprising a plurality of key fragments;

means for selecting the number and/or order of key fragments of said common key to derive an encryption key and operable to provide data indicative of the current selection;

an encryption stage for encrypting information by use of said encryption key to provide encrypted information for sending to said receiver node;

and means for distributing to said receiver node said encrypted information, information defining said common key and said selection data.

The common key generating means may be operated to generate the common key as two key blocks each of which comprises a plurality of key fragments. In this case the selection means operates one of the two key blocks to the encryption key and also provides an indication of the selected block which is included in the data distributed. This mode operation can be made particularly useful by having the common key generating means operable after a change in the key block selection to vary the previously selected block of the common key. Thus by employing the two key blocks, one provides the current key and the one that previously provided the current key is then varied to provide a fresh source of the current key upon the next block selection change. As will be described in greater detail below this manner of variation of the key blocks enables one block to be changed without interrupting the current key obtained from another block.

The invention as stated broadly above also encompasses the case where the common key generating means is operable to generate the common key in the form of two key fragments, the selection means being operable to select one of the two fragments as the current encryption key, and the common key generating means being operable after a change in the key fragment selection to vary the previously selected key fragment of the common key. As in discussing the key blocks above, a key fragment can be varied for a subsequent encryption operation at a time it is not being used as the current key.

In another aspect of the invention there is provided a sending system for sending encrypted information from a transmission node to a receiver node, comprising:

means for generating a common key for encrypting information to be sent, said common key comprising a plurality of key blocks,

an encryption stage for receiving information to be sent and responsive to a selected common key block to encrypt said information using said selected key block so as to provide encrypted information for sending to the receiver node,

means for selecting the common key block for encryption and operable to provide data indicative of the key block selected for sending to the receiver node;

said common key generating means being operable in response to a change in the common key block selected for encryption to alter the key block previously selected;

and means for distributing the encrypted information, information defining the current common key, and data indicative of the current selected key block.

In order to distribute the common key to the receiver node (whatever the block and/or fragment selection employed), the sending system may comprise means for encrypting the common key and the distribution means distributes the encrypted form of it. Such a facility finds particular utility in distributing encrypted common keys to a plurality of receiver nodes. It is advantageous from a point of view of avoiding interception that each receiver node, as in a subscribers' network, is allotted an individual address number. For such a network it is preferred that the means for encrypting the common key further comprises means for generating a further encryption key for a selected receiver node that is related to the address number of that node, and a further encryption stage for encrypting the common key by use of the further encryption key. Thus the encrypted common key as sent to each receiver node is encrypted in a way that is related to the address number of the node.

The means for generating the further encryption key may be realised by means for providing a base encryption key individual to each receiver node and comprising a plurality of key fragments, and further selection means for selecting the number and/or order of key fragments of a base encryption key and operable to provide data indicative of the selection made. This last-mentioned selection data is distributed through the aforementioned distribution means.

The base encryption key is preferably obtained from means storing the address numbers of the receiver nodes, means storing a master encryption key and an encryption stage for encrypting a selected address number with the master encryption key to obtain the base encryption key pertaining to that address number.

In a still further aspect, the invention provides a receiver for use as a receiver node with a sending system of the invention, comprising:

a decryption stage for decrypting encrypted information received from the transmitter node;

first means for receiving the information defining the common key distributed from the transmitter node

EP 0 194 769 B1

in order to provide the common key in the receiver,

second means responsive to the common key and to said selection data received from the transmitter node to derive a decryption key therefrom and apply same to the decryption stage to recover the information in clear.

Where, as discussed above, the common key generating means in the sending system is operable to generate the common key in the form of two key blocks and the selection means provides the indication of the selected key block, the receiver can be correspondingly provided with means responsive to the block selection data to select the key block corresponding to that selected in the sending system for deriving the receiver decryption key. A similar arrangement is used where the common key is in two fragments and the appropriate fragment is to be selected in the receiver. Where two key blocks are employed in the sending system and each is of a plurality of fragments among which the fragment selection as well as the block selection is indicated, then the just-mentioned means in the receiver is arranged to respond to both selection indications so as to produce a corresponding selection in the receiver.

Mention was made above of the desirability of distributing the common key in an encrypted form. In this case the first means of the receiver may comprise a further decryption stage responsive to reception of said encrypted common key to decrypt same. More particularly the receiver may be adapted for complementary operation with a sending system that encrypts the common key with a further encryption key that is related to the address number of a selected receiver node. In this case the receiver further comprises means storing a key individual to the receiver to provide the decryption key for the further decryption stage. Where the further encryption key is derived by selection of fragment the stored key may comprise a plurality of key fragments and the first means in the receiver comprises means responsive to received data indicative of the selection made by the aforementioned further selection means of the sending system and operable to select the number and/or order of the key fragments of the stored key in the receiver to provide the decryption key for the further decryption stage.

These preferred features of the receiver operating in complementary fashion to the selection procedures at the sending end lead to particular advantage in a subscribers' network of receiver nodes in which each is allotted a different address number. In the embodiment to be described the address numbers enable individual receivers to be addressed with individually encrypted common key data.

In the general case discussed above where the common key is encrypted with the aid of a further encryption key related to the address number of a selected receiver node, a network of receiver nodes can be controlled from the sending system. In this regard the invention provides a network of receivers for use as respective receiver nodes with such a sending system, each receiver comprising:

a decryption stage for decrypting encrypted information received from the transmitter node;

first means for receiving from the transmission node an encrypted common key related to the address number of the respective receiver node in order to provide said common key in the receiver, said first means comprising a further decryption stage responsive to reception of said encrypted common key to decrypt same; and means storing a key individual to the address number of the respective receiver node for providing a decryption key to said further decryption stage for recovery of said common key from said received encrypted common key related to the same address number; and

second means responsive to said common key and to said selection data received from the transmission node to derive a decryption key therefrom and apply same to said decryption stage to recover the information in clear.

The selection of a receiver node to generate an individual encrypted common key related to the address number of that receiver node, the distribution of the encrypted common key to the selected receiver node, and the recognition by the selected receiver node of the encrypted common key intended for it may be done by sending information in packets containing the address of the receiver node.

In yet another aspect of the invention there is provided a method of sending information from a transmitter node to a receiver node, comprising:

at the transmitter node:-

generating a common key for use in encrypting information in clear to be sent, said common key comprising a plurality of key fragments; encrypting information in clear by use of an encryption key comprising a selected number and/or order of said key fragments; and distributing to said receiver node the encrypted information, information defining said common key, and data defining said selection of the number and/or order of said key fragments; and

at the receiver node:-

receiving said distributed encrypted information, information defining said common key and said

4

selection data; and

using said selection data to recover said encryption key from said common key information; and decrypting said encrypted information with said recovered encryption key to recover said information.

In performing the method of the invention the common key may comprise two key blocks, each of which comprises key fragments, and the encryption key is derived from the key fragment of a selected key block at the transmitter node. Data indicative of the selected key block is distributed to said receiver node, and the selection data is applied at the receiver node to select the key block indicated by said key block indicative data.

Preferably the information defining the common key is an encrypted form of the common key. This latter feature has particular utility where there are a plurality of receiver nodes each allotted an individual address number, and in which the common key information is sent to each receiver node by encrypting said common key with a further encryption key that is related to the address number of that node. To this end, each further encryption key may be obtained by selecting the number and/or order of key fragments of a base encryption key individual to a receiver node and comprising a plurality of key fragments. Data indicative of the selection applied to each base encryption key is sent to the receiver nodes. Furthermore, each receiver node stores its base encryption key and in response to the selection data pertaining thereto, the further encryption key is derived and is used to decrypt the encrypted common key for the receiver node so as to obtain the common key. The base encryption key for each receiver node may be obtained by encrypting the address number of that receiver node with a master encryption key.

As already noted the invention finds particular application in information distribution by direct broadcast by satellite and an embodiment of this invention and for DBS purposes will now be described in greater detail with reference to the accompanying drawings, wherein like numerals refer to like parts, and in which:

Fig. 1 is a functional diagram of the encryption system at the transmission end of a DBS network;

Fig. 2 is a functional diagram of the decryption system at each receiver terminal;

Fig. 3 is a functional diagram of the encoding system utilized at the factory in order to set the receiver terminal memories for decryption of the distributed signal; and

Fig. 4 is a schematic representation of the composite video signal over which the encrypted signals, key information, and control information are transmitted.

We shall firstly describe in general terms the principles of a television broadcast system using DBS in which the invention is applied.

In the direct broadcast satellite service in which the cryptographic techniques of the present invention are used, the video signals are processed and transmitted in analog form. Audio signals are digitized and transmitted in digital data form. Addressable control data is organized into packets according to address and transmitted in the same digital form as the audio signals. All of the signals are combined in baseband using time-division-multiplex techniques. The combined baseband signal is then transmitted over the satellite link to subscribers' receivers using FM modulation.

In general, the transmission end equipment consists of a program processing unit and a real time controller. The program processing unit performs video signal processing and scrambling, audio digitization, encryption of the audio data, and baseband signals time multiplexing. The real time controller generates the audio cryptographic keys, encrypts the addressable control mesages, generates the packet messages in accordance with the tranmission protocol, maintains the user data base and communicates with other processing units.

The receiving end equipment includes an addressable controller-decoder designed for use with a receiver which has the necessary interface for interaction with the decoder. The addressable controller-decoder demultiplexes the baseband signal, controls the receiver, descrambles the video signal, decrypts the audio data, and converts the audio data into analog form.

The baseband signal utilizes a composite video signal format which includes active video portions and horizontal blanking interval portions. The two audio channels and control data channel occupy a portion of the time normally allotted to the horizontal blanking interval. The video frame synchronization information and the zero level reference are transmitted during the vertical blanking interval. The audio data and the control data are transmitted in a burst, synchronous mode. The data is non-returnable to zero binary encoded.

A two-level video scrambling screen is used. The first level is achieved by removing the line and frame synchronization pulses completely from the video signal. A unique sync word is transmitted in the vertical blanking interval for synchronization purposes. The addressable controller-decoder establishes synchronization by searching and locating the sync word. Once the sync word is located, all the sync pulses are reconstructed with reference to the sync word. This technique is used in conjunction with video signal inversion, which is the second security level. The sequence of video inversion is controlled by a binary bit stream at the transmitting end. The same bit stream is used to recover the inverted signal at the receiving end.

Unlike video scrambling, a highly secure audio encryption system can be achieved relatively inexpensively. The decryption circuit, being totally digital, can be implemented using semi-custom or custom integrated circuits. The system uses an encryption scheme in which the clear audio bit stream is combined with the bit stream generated by a stream cipher using an exclusive OR operation. The receiving end decrypts the audio bit stream using the same stream cipher bit stream.

The present invention is applied to this encryption system such that the stream cipher bit stream is generated by a set of key fragments selected from the current key block of a double length common audio key and on initializing vector. The algorithm for generating the bit stream is secret. The entire common audio key is distributed to each receiver in encrypted form through the control data channel. One key block of the key is designated as the current key block and used for the duration of the communication session. The initializing vector is used for the duration of each video frame and is transmitted in the clear form in the horizontal blanking interval. Extremely low error rate for the initializing vector is achieved by transmitting each bit many times.

The addressable control data is organized into data blocks of 128 bits each. This channel carries much sensitive information in encrypted form such as audio decryption key information and authorization tier levels. The system is designed to prevent an eavesdropper from receiving the correct information and to prevent a legitimate receiver from receiving more information than is authorized. In part, this is achieved by encrypting the common audio key differently for each receiver. In this way, even in the unlikely event that an encrypted key is compromised, damage is limited because each encrypted key is usable only on a single receiver. Further, security is obtained because the key fragments in use can be rearranged periodically and new keys can be distributed and used for each transmission session.

The common audio key is encrypted for each receiver using a secret block cipher based on a unique key. The key has 64 bits which are assembled from 128 bits of stored information. When compared with the conventional Data Encryption Standard algorithm, the present block cipher has a larger block and a longer key. Accordingly, brute force attacks on the cipher will take considerably more effort.

The cryptographic system is described herein as designed for use in a pay television distribution network. However, the principles involved are applicable to other types of signal distribution systems where security is required. It employs three keys to provide security against unauthorized program viewing. A master factory key is arbitrarily chosen as a system constant. The master factory key is used in conjunction with an individual subscriber unit address number to produce a second key, called a subscriber unit signature key, unique to each subscriber.

The common audio decryption key, is arbitrarily chosen to encrypt the audio signal at the transmission end. The common audio key is distributed to each authorized subscriber in individualized form through the use of the second key.

The common audio key preferably includes two key blocks, each composed of 40 bits or five 8-bit bytes, for example. One key block is designated as the current key block. A key fragment set of the five 8-bit bytes of the current block, arranged in a selected order (permuted common audio key) is used at a time for encryption and decryption. During the time when one key block is employed, the other key block may be varied. After the variation of the key block is completed, the new common audio key, containing the currently used key block and the varied key block is distributed to each subscriber unit to replace the old key. Upon command, the broadcast information begins to be encrypted with a selected key fragment set from the varied key block and all subscriber units are switched over to the key fragment set from the varied key block, at the same time. This new fragment set is used to construct the new permuted key for use in decryption.

A 5-bit encryption key number or code is used to define the order of the bytes forming the key fragment set of the current key block. The encryption key number is transmitted to all receivers at the same time in the header portion of the control data stream, as described below. Each version of the common audio key is distributed in its entirety in encrypted form to each receiver individually in an addressable packet in the control data stream.

6

The following table I illustrates the structure of a typical 80-bit common audio key divided into blocks of five 8-bit bytes each:

**BIT REF**          <u>**TABLE I**</u>

| 15 | 14 | 13 | 12 | 11 | 10 | 9 | 8 | 7 | 6 | 5 | 4 | 3 | 2 | 1 | 0 |
|----|----|----|----|----|----|---|---|---|---|---|---|---|---|---|---|

| BYTE 10 | BYTE 00 |
|---------|---------|
| BYTE 11 | BYTE 01 |
| BYTE 12 | BYTE 02 |
| BYTE 13 | BYTE 03 |
| BYTE 14 | BYTE 04 |

BLOCK A          BLOCK B

7

The following table II defines the arrangement of the common audio key fragments from the current key block to form the various key fragment sets (permuted keys) in accordance with the encryption key number. "b" stands for the block (b = 1 stands for Block A, and b = 0 stands for block B) and can be 1 or 0, depending upon which block is designated as the current block:

**TABLE II**

| | | | | | | | | | | | | | | | | NO ENCRYPTION |
|---|---|---|---|---|---|---|---|---|---|---|---|---|---|---|---|---|
| **PERMUTED KEY (ALL ENTRIES ARE 8-BIT BYTE)** BIT 0 | b0 | b3 | b2 | b1 | b2 | b1 | b4 | b2 | b4 | b0 | b3 | b0 | b3 | b4 | | |
| | b1 | b0 | b3 | b2 | b0 | b4 | b0 | b1 | b0 | b1 | b3 | b2 | b4 | b4 | b2 | |
| | b2 | b1 | b0 | b3 | b1 | b0 | b2 | b4 | b3 | b0 | b4 | b0 | b3 | b2 | b1 | |
| | b3 | b2 | b1 | b0 | b4 | b2 | b1 | b0 | b4 | b3 | b1 | b4 | b2 | b1 | b3 | |
| BIT 39 | b4 | b4 | b4 | b4 | b3 | b3 | b3 | b3 | b2 | b2 | b2 | b1 | b1 | b0 | b0 | |
| **ENCRYPTION KEY NO. (5 bit)** | 1 | 0 | 1 | 0 | 1 | 0 | 1 | 0 | 1 | 0 | 1 | 0 | 1 | 0 | 1 | 0 |
| | 0 | 1 | 1 | 0 | 0 | 1 | 1 | 0 | 0 | 1 | 1 | 0 | 0 | 1 | 1 | 0 |
| | 0 | 0 | 0 | 1 | 1 | 1 | 1 | 0 | 0 | 0 | 0 | 1 | 1 | 1 | 1 | 0 |
| | 0 | 0 | 0 | 0 | 0 | 0 | 0 | 1 | 1 | 1 | 1 | 1 | 1 | 1 | 1 | 0 |
| | b | b | b | b | b | b | b | b | b | b | b | b | b | b | b | b |

The subscriber unit signature key stored in the receiver memory also contains more than one key fragment and provides a base key from which a further selection is made for encrypting the common key individually for each receiver. Preferably it contains seven 16-bit parts or fragments from which four 16-bit fragments are selected to construct a subscriber cryptographic key. This key is employed in encryption and decryption of the common audio key.

A 3-bit signature type or code is used to define the selection and the arrangement of the 16-bit key fragments used to construct the subscriber cryptographic key. The signature type code is transferred to the subscriber unit through the broadcast signal by means of an addressable packet.

The following table III defines the relationship between the 3-bit signature type code and the selection and order of the four 16-bit fragment sets selected from the seven 16-bit fragments of the subscriber unit signature key. The numbers 1 through 7 correspond, respectively, to the seven 16-bit fragments or signature numbers:

| SIGNATURE TYPE | | | SUBSCRIBER CRYPTOGRAPHIC KEY (ALL ENTRIES ARE 16-BIT SIGNATURES) | | | |
|---|---|---|---|---|---|---|
| | | | BIT 0 | | | BIT 63 |
| 1 | 0 | 0 | 4 | 5 | 6 | 7 |
| 0 | 1 | 0 | 3 | 4 | 5 | 6 |
| 1 | 1 | 0 | 2 | 3 | 4 | 5 |
| 0 | 0 | 1 | 1 | 2 | 3 | 4 |
| 1 | 0 | 1 | 7 | 1 | 2 | 3 |
| 0 | 1 | 1 | 6 | 7 | 1 | 2 |
| 1 | 1 | 1 | 5 | 6 | 7 | 1 |
| 0 | 0 | 0 | NO ENCRYPTION | | | |

TABLE III

Each version of the common audio key is first encrypted using the subscriber cryptographic key for a specific receiver unit as the key for a unique block cipher algorithm. The resulting encrypted common audio keys are distributed to the specific receiver unit by an addressed packet in an addressable data stream.

9

At the specific subscriber receiver unit, the received encrypted common audio key is decrypted using the unique block cipher algorithm and as a key, the subscriber cryptographic key which is constructed from a fragment set selected in accordance with the received signature type code, from the factory pre-loaded subscriber unit signature key. The permuted key, constructed from the fragment set selected in accordance with the received encryption key number from the current block key block of the decrypted common audio key,is then used to decrypt the audio signal.

An encrypted common audio key is periodically transmitted to each receiver unit, preferably at least once every transmission session and is stored in a memory in the receiver until a new common audio key is received. The block of the common audio key not being used for encryption can be varied during the time it is not in use for encrypting and decrypting so as to form a part of a new or replacement common audio key. The replacement key includes a current key block identical to that of the previous key and newly varied key block. It is encrypted and distributed for storage by each receiver unit. At the end of a transmission session, upon command, in the form of a new encryption key number indicating a set of fragments from the varied key block for use, all subscriber units switch from one block of the common audio key to the other. Thus, a replacement key can be installed without interruption of the operation of the system.

The integrity of the three key system depends on the effectiveness of the security measures employed to keep the master factory key safe from independent discovery or unauthorized use. The embodiment described eliminates the necessity for protecting a separate key for each subscriber unit. Only a single key, the master factory key, need be protected at the transmission end.

Since the direct broadcast satellite network in which the cryptographic system being described is employed is designed to accommodate 2-3 million different subscriber receiver units, the necessity of previous cryptographic systems for protecting the different key for each subscriber unit is quite burdensome. The three key cryptographic system now proposed eliminates this problem entirely as it requires only a single master factory key be protected.

The use of selectable key fragment sets enhances system agility by permitting the key fragment arrangement to be changed rapidly. The use of a common audio key consisting of two interchangeable key blocks, only one of which is used for decryption at a time, permits new keys to be distributed without interruption of the operation of the system.

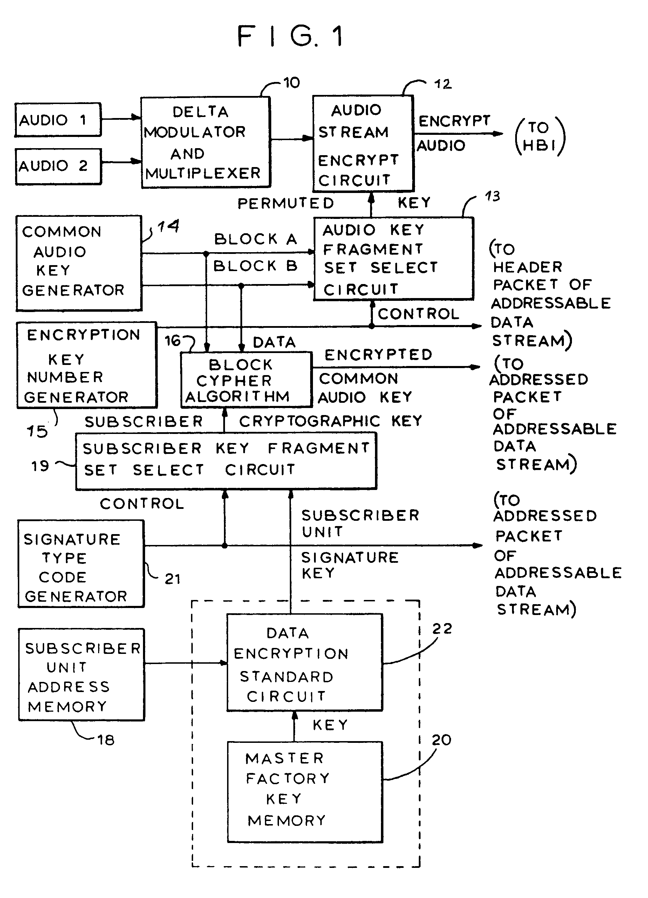

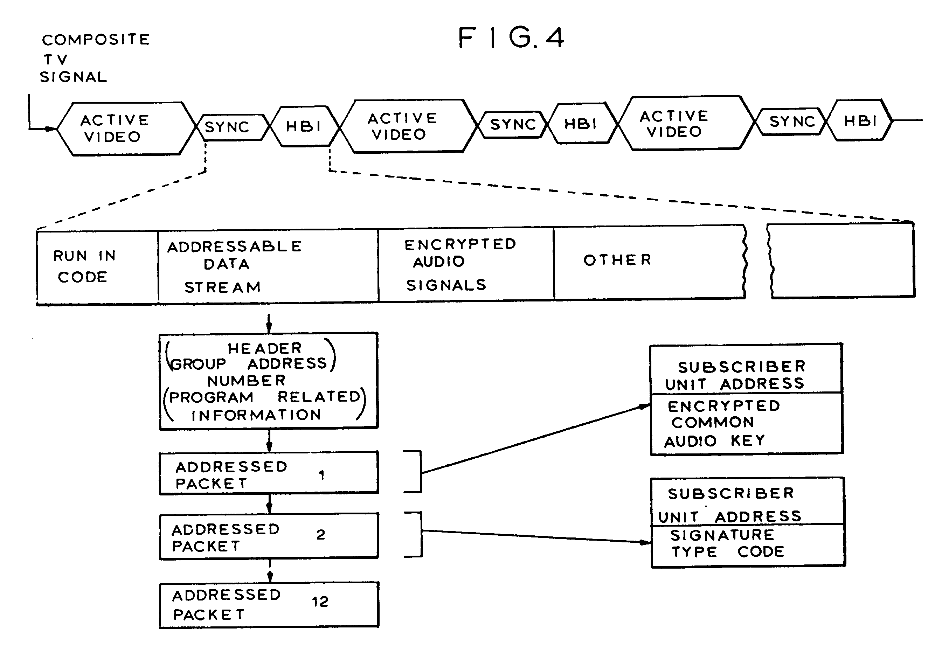

As seen in Fig. 1, which depicts the functions at the transmission end of the system, the audio channel inputs AUDIO 1 and AUDIO 2 form the inputs to a delta modulator and multiplexer 10 of conventional design. The digitized output from modulator 10 is encrypted in an audio stream encryption circuit 12. The output of encryption circuit 12 is the encrypted audio signal which forms a portion of a data stream. The data stream, illustrated in Fig. 4, is inserted into the horizontal blanking intervals (HBI) of the composite television signal which is transmitted via satellite from the transmission end to each of the subscriber receiver units.

The digitized audio signal is encrypted using a permuted key consisting of a selected key fragment set from a key block (designated as the current key block) obtained from the common audio key. Each common audio key is generated by a common audio key generation circuit 14. Each common audio key preferably consists of two key blocks (block A and block B). Each block includes five 8-bit bytes. The five bytes from the current key block are arranged in a key fragment set to construct the permuted key for encryption. The set of fragments selected from the common audio key, which forms the permuted key, are selected in accordance with a 5-bit encryption key number. One of the bits of the encryption key number defines the key block designated as the current key block. The remaining four bits define the arrangement of the five bytes of the current key block which form the permuted key. The bits of the encryption number defining the byte arrangement may be changed at any time and are preferably changed periodically, such as at the end of each hour of broadcasting. The bit, which defines the current key block can also be changed periodically, but usually less often, for example, at the end of each daily transmission session, after the non-designated key block has been varied and replacement common audio keys encrypted and distributed to each receiver.

A fragment set from the current key block of the common audio key is selected to construct the permuted key for use in encrypting circuit 12 by an audio key fragment set select circuit 13. Circuit 13 is controlled by a 5-bit encryption key number obtained from generator 15.

The entire common audio key (both blocks) is distributed in encrypted form to each individual subscriber unit prior to the beginning of a transmission session. The common audio key is encrypted differently for each unit. Each of the encrypted common audio keys is placed in a different addressed portion of the data stream. These portions of the data stream are addressed to and can be received only by the particular subscriber unit for which the encrypted common audio key is intended.

Each common audio key is formed by encrypting through the use of a 64-bit key, called the "subscriber cryptographic key", which is constructed of a fragment set selected from a subscriber unit signature key. The subscriber unit signature key preferably consists of several 16-bit fragments or signatures and is unique to a particular unit. The subscriber cryptographic key consists of four 16-bit fragments or signatures selected from the subscriber unit signature key in accordance with a 3-bit signature type code. Each distributed common audio key is formed by encrypting the common audio key using the subscriber cryptographic key in a block cipher algorithm circuit 16. The fragment set which forms the subscriber cryptographic key is selected in signature key fragment selection circuit 19 under the control of the signature type code from a signature type code generator 21. The signature type code can be changed periodically to alter the subscriber cryptographic key. The signature type code is transferred to each receiver in a packet addressed to the receiver.

Each unique subscriber unit signature key is a function of the subscriber unit address number for the receiver unit to which the portion of the data stream including the encrypted common audio key is addressed, More specifically, each unique subscriber unit signature key is derived by encrypting the subscriber unit address number, stored in a memory 18, using the master factory key, stored in a master factory key memory 20, in an encryption circuit 22 which employs the Data Encryption Standard algorithm.

During a particular transmission session, only the designated common audio key block is used for encrypting and decrypting. The non-designated key block may be varied during this time by common audio key generator 14, Varying the non-designated block will not effect the operation of the system. The varied key will be encrypted for each receiver unit as described above and then distributed. After distribution, the transmission session is ended and a new encryption key number is broadcast to all receivers simultaneously designating the newly varied block for use in encryption and decryption. In this way, distribution of replacement keys can take place over a period of hours, but the entire system switches to the replace key at the same time.

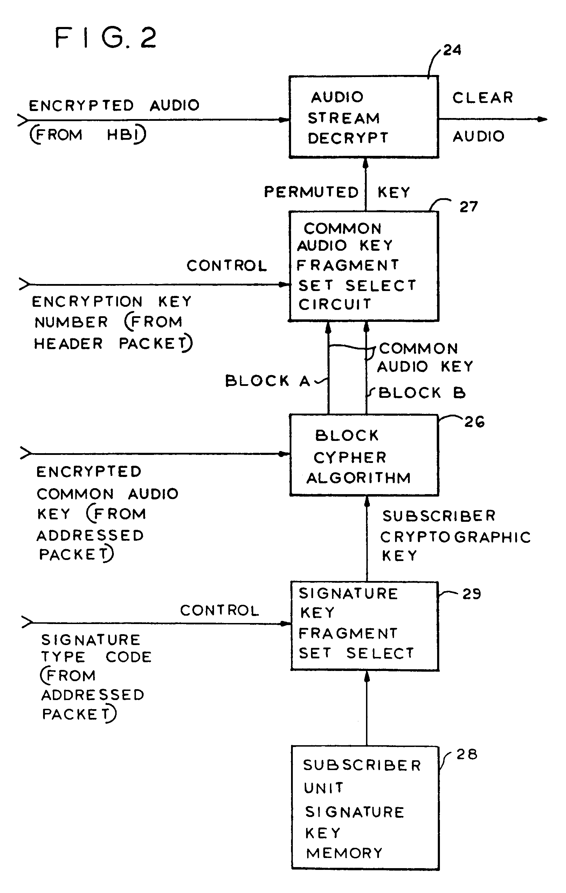

As shown in Fig. 2, which depicts the functions of the subscriber receiver units, the transmitted composite television signal is received and the encrypted audio signal is extracted from the data stream in the horizontal blanking intervals and forms an input to an audio stream decryption circuit 24. The encrypted audio signal will be decrypted using the permuted key which is a selected fragment set from the current block of the common audio key. The common audio key is derived from the encrypted common audio key which is transmitted to the receiver.

The receiver monitors the data stream in the horizontal blanking intervals until it detects the portion thereof with its unique address number. The encrypted common audio key for the particular subscriber unit is then obtained from the addressed portion. The encrypted common audio key is decrypted in a block cipher algorithm circuit 26 such that common audio key blocks, block A and block B, are obtained in clear form. The key blocks are fed to a common audio key fragment set select circuit 27. Circuit 27 receives the encryption key number captured from the header portion of the data stream and uses same to select the appropriate key block and arrange the fragments thereof to construct the permuted key. The permuted key is then used in audio stream decryption circuit 24 to decrypt the audio stream.

A selected fragment set of the subscriber unit signature key for the particular subscriber unit is utilized to construct the subscriber cryptographic key for use in decryption of the common audio key in a block cipher algorithm circuit 26. The unique subscriber unit signature key for each subscriber unit is stored in a memory 28 within the unit at the factory.

Memory 28 is accessed and the subscriber unit signature key is entered into a signature key fragment set select circuit 29 which receives the signature type code captured from the addressed portion of the data stream. Circuit 29 selects and arranges the appropriate fragments to construct the subscriber cryptographic key.

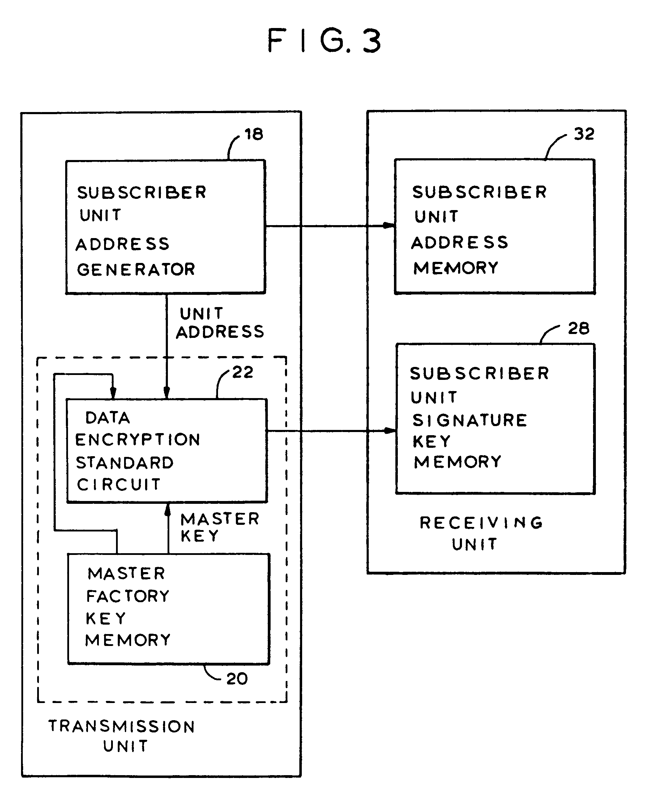

Fig. 3 schematically depicts the factory encoding system. At the factory, the subscriber unit address is read from the subscriber unit address memory 18 and stored in the subscriber unit address memory 32 in the receiver. The subscriber unit address is encrypted in the Data Encryption Standard algorithm circuit 22 using the master factory key from memory 20 and is then stored in the subscriber unit signature key memory 28 in the receiver. Later, when signals are being transmitted, the master factory key from memory 20 is used in the Data Encryption Standard algorithm circuit 22 to generate the unique subscriber unit signature key for each subscriber unit, as described above.

Fig. 4 schematically represents the transmitted composite TV signal which comprises a plurality of active video portions, sync portions, and horizontal blanking portions. The data is stream inserted into each horizontal blanking portion .

The data stream includes a run-in code for synchronization, an addressable data stream portion, and encrypted digitized audio signal .

The addressable data stream portion includes a header portion, containing information for addressing certain groups of receivers and certain program related information common to all receiving units in the addressed group, including the encryption key number. The addressable data stream portion also includes a plurality of addressed packets 1...n, each containing the address number for a particular receiving unit. The addressed packets also contain the encrypted common audio key and the signature type code for the addressed receiver.

Each receiving unit captures encrypted audio information. It locates a header with its group number and stores the encryption key number therefrom. It then searches for addressed packets with its address number. When the packets with its address number are located, the unit obtains the signature type code and encrypted common audio key therein and uses them, in conjunction with the unique subscriber unit signature key stored in the unit, to obtain the common audio key blocks. The encryption key number from the header packet is then used to construct the permuted key.

Replacement common audio keys, with a varied key block, may be distributed and stored during the transmission session. Since the current key block is the same in the old key as it is in the replacement key, there is no discontinuity in operation as one hey replaces the other. At the end of the transmission session, a new encryption key number is distributed to all receiving units at the same time in the header portion of the control data stream. The new encryption key number contains a first bit designating the varied key block as the then current key block, that is, the function of the key blocks is interchanged and the varied key block is now used for encryption and decryption. Accordingly, all receiving units switch over to the replacement key at the same time.

It will now be appreciated that multiple key cryptographic system has been described which employs a cryptographic key composed of interchangeable key blocks to permit replacement keys to be installed in the receiving units without interruption of operation. The key permits a varied key block to be distributed over a relatively long time while the current key block is still in use and, thereafter, switchover by all receiving units, upon a single command, in a relatively short time, to the replacement key. It also employs key fragments, the selection and arrangement of which can be changed periodically for increased agility. The use of changeable key fragment sets permits dynamic changes to occur periodically, enhancing the security of the system.

## Claims

1. A sending system for sending encrypted information from a transmission node to a receiver node, comprising:

   means (14) for generating a common key for use in encrypting information to be sent, said common key comprising a plurality of key fragments;

   means (13, 15) for selecting the number and/or order of key fragments of said common key to derive an encryption key and operable to provide data indicative of the current selection;

   an encryption stage (12) for encrypting information by use of said encryption key to provide encrypted information for sending to said receiver node;

   and means for distributing to said receiver node said encrypted information, information defining said common key and said selection data.

2. A sending system as claimed in Claim 1 in which said common key generating means (14) is operable to generate said common key in the form of two key blocks, each block comprising a plurality of key fragments, and in which said selection means (13) operates on a selected one of the two key blocks to provide said encryption key and is operable to provide an indication of the selected block which is included in the data distributed.

3. A sending system as claimed in Claim 2 in which said common key generating means (14) is operable after a change in the key block selection to vary the previously selected block of said common key.

4. A sending system as claimed in Claim 1 in which said common key generating means (14) is operable to generate said common key in the form of two key fragments and in which said selection means (13) operates to select one of the two key fragments as the current encryption key, and wherein said common key generating means (14) is operable after a change in the key fragment selection to vary the previously selected key fragment of said common key.

EP 0 194 769 B1

**5.** A sending system for sending encrypted information from a transmission node to a receiver node, comprising:

means (14) for generating a common key for encrypting information to be sent, said common key comprising a plurality of key blocks,

an encryption stage (12) for receiving information to be sent and responsive to a selected common key block to encrypt said information using said selected key block so as to provide encrypted information for sending to the receiver node,

means (13, 15) for selecting the common key block for encryption and operable to provide data indicative of the key block selected for sending to the receiver node;

said common key generating means (14) being operable in response to a change in the common key block selected for encryption to alter the key block previously selected;

and means for distributing the encrypted information, information defining the current common key, and data indicative of the current selected key block.

**6.** A sending system as claimed in any preceding claim further comprising means (16-22) for encrypting said common key, and in which said distribution means is arranged to distribute said common key in its encrypted form.

**7.** A sending system as claimed in Claim 6 for distributing encrypted information to a plurality of receiver nodes in which each of said receiver nodes is allotted an individual address number, and in which said means (16-22) for encrypting said common key comprises means (18-22) for generating a further encryption key for a selected receiver node that is related to the address number of that node and a further encryption stage (16) for encrypting said common key by use of said further encryption key.

**8.** A sending system as claimed in Claim 7 in which said means (18-22) for generating a further encryption key comprises means (18, 20, 22) for providing a base encryption key individual to each receiver node, each base encryption key comprising a plurality of key fragments; further selection means (19, 21) for selecting the number and/or order of key fragments of a base encryption key to provide said further encryption key and operable to provide data indicative of the selection made, said distribution means being operative to distribute the last-mentioned data.

**9.** A sending system according to Claim 8 in which said means (18, 20, 22) for providing said base encryption keys comprises means (18) storing the address numbers of the receiver nodes, means (20) storing a master encryption key, and an encryption stage (22) for encrypting a selected address number with said master encryption key to obtain the base encryption key pertaining to that address number.

**10.** A sending system as claimed in any preceding claim in which said information that is encrypted is audio accompanying a television picture signal.

**11.** A receiver for use as a receiver node with a sending system as claimed in Claim 1 or Claim 5: comprising

a decryption stage (24) for decrypting encrypted information received from the transmitter node;

first means (26-29) for receiving the information defining said common key distributed from the transmitter node in order to provide said common key in the receiver and

second means (27) responsive to said common key and to said selection data received from the transmitter node to derive a decryption key therefrom and apply same to said decryption stage (24) to recover the information in clear.

**12.** A receiver as claimed in Claim 11 for use as a receiver node with a sending system as claimed in Claim 2, in which said second means (27) is responsive to said selected block data to select the key block corresponding to that selected in the sending system for obtaining said decryption key.

**13.** A receiver as claimed in Claim 11 for use as a receiver node with a sending system as claimed in Claim 4, in which said second means (27) is responsive to said selected fragment data to select the fragment corresponding to that selected in the sending system as said decryption key.

13

**14.** A receiver as claimed in Claim 11, 12 or 13 for use as a receiver node with a sending system as claimed in Claim 6, in which said first means (26-29) comprises a further decryption stage (26) responsive to reception of said encrypted common key to decrypt same.

**15.** A receiver as claimed in Claim 14 for use as a receiver node with a sending system as claimed in Claim 6 in which said first means (26-29) further comprises means (28) storing a key individual to the receiver node for providing a decryption key to said further decryption stage for recovery of said common key from said encrypted common key.

**16.** A receiver as claimed in Claim 15 for use as a receiver node with a sending system as claimed in Claim 7, in which said stored key individual to the receiver node comprises a plurality of key fragments, and said first means (26-29) further comprises means (29) responsive to the received data indicative of the selection made by said further selection means of the sending system and operable to correspondingly select the number and/or order of said key fragments of said stored key to provide said decryption key for said further decryption stage (26).

**17.** A network of receivers for use as respective receiver nodes with a sending system as claimed in Claim 7, each receiver comprising:

a decryption stage (24) for decrypting encrypted information received from the transmitter node;

first means (26-29) for receiving from the transmission node an encrypted common key related to the address number of the respective receiver node in order to provide said common key in the receiver, said first means (26-29) comprising a further decryption stage (26) responsive to reception of said encrypted common key to decrypt same; and means (28) storing a key individual to the address number of the respective receiver node for providing a decryption key to said further decryption stage for recovery of said common key from said received encrypted common key related to the same address number; and

second means (27) responsive to said common key and to said selection data received from the transmission node to derive a decryption key therefrom and apply same to said decryption stage (24) to recover the information in clear.

**18.** A method of sending information from a transmitter node to a receiver node, comprising the following steps:

at the transmitter node:-

generating a common key for use in encrypting information to be sent, said common key comprising a plurality of key fragments; encrypting information by use of an encryption key comprising a selected number and/or order of said key fragments; and distributing to said receiver node the encrypted information, information defining said common key, and data defining said selection of the number and/or order of said key fragments; and

at the receiver node:-

receiving said distributed encrypted information, information defining said common key and said selection data; and

using said selection data to recover said encryption key from said common key information; and decrypting said encrypted information with said recovered encryption key to recover said information

**19.** A method as claimed in Claim 18 in which said common key comprises two key blocks, each of which comprises key fragments, and the encryption key is derived from the key fragments of a selected key block;

and further comprising distributing to said receiver node data indicative of the selected key block; and

applying said selection data at the receiver node to the key block indicated by said key block-indicative data.

**20.** A method as claimed in Claim 18 or 19 in which the information defining said common key is an encrypted form of said common key.

14

**21.** A method as claimed in Claim 20 in which there are a plurality of receiver nodes each allotted an individual address number, and in which the common key information is sent to each receiver node by encrypting said common key with a further encryption key that is related to the address number of that node.

**22.** A method as claimed in Claim 21 in which each further encryption key is obtained by selecting the number and/or order of key fragments of a base encryption key that is individual to a receiver node and that comprises a plurality of key fragments, and in which data indicative of the selection applied to each base encryption key is sent to the receiver nodes; and in which each receiver node stores its base encryption key and in response to the selection data pertaining thereto, the further encryption key is derived and is used to decrypt the encrypted common key for the receiver node so as to obtain said common key.

**23.** A method as claimed in Claim 22 in which the base encryption key for each receiver node is obtained by encrypting the address number of that receiver node with a master encryption key.

**Revendications**

**1.** Système d'émission pour émettre une information cryptée depuis un noeud d'émission vers un noeud récepteur, comportant :

des moyens (14) pour générer un code commun pour crypter une information devant être émise, ledit code commun comportant une pluralité de fragments de code ;

des moyens (13, 15) pour sélectionner le nombre et/ou l'ordre de fragments de code dudit code commun pour extraire un code de cryptage et actionnables pour délivrer des données représentatives de la sélection présente ;

un étage de cryptage (12) pour crypter une information par utilisation dudit code de cryptage pour délivrer une information cryptée pour une émission vers ledit noeud récepteur ;

et des moyens pour distribuer audit noeud récepteur ladite information cryptée, information définissant ledit code commun et lesdites données de sélection.

**2.** Système d'émission selon la revendication 1, dans lequel lesdits moyens de génération de code commun (14) sont actionnables pour générer ledit code commun sous la forme de deux blocs de code, chaque bloc comportant une pluralité de fragments de code, et dans lequel lesdits moyens de sélection (13) opèrent sur l'un, choisi, des deux blocs de code pour délivrer ledit code de cryptage et sont actionnables pour fournir une indication du bloc sélectionné qui est inclus dans les données distribuées.

**3.** Système d'émission selon la revendication 2, dans lequel lesdits moyens de génération de code commun (14) sont actionnables après un changement de sélection de bloc de code pour modifier le bloc antérieurement sélectionnée dudit code commun.

**4.** Système d'émission selon la revendication 1, dans lequel lesdits moyens de génération de code commun (14) sont actionnables pour générer ledit code commun sous la forme de deux fragments de code et dans lequel lesdits moyens de sélection (13) opèrent pour sélectionner l'un des deux fragments de code en tant que code de cryptage présent, et dans lequel lesdits moyens de génération de code commun (14) sont actionnables après un changement de sélection de fragment de code pour modifier le fragment de code antérieurement choisi dudit code commun.

**5.** Système d'émission pour émettre une information cryptée depuis un noeud d'émission vers un noeud récepteur, comportant :

des moyens (14) pour générer un code commun pour crypter une information devant être émise, ledit code commun comportant une pluralité de blocs de code,

un étage de cryptage (12) pour recevoir une information devant être émise et sensible à un bloc de code commun choisi pour crypter ladite information en utilisant ledit bloc de code sélectionné de manière à délivrer une information cryptée en vue d'une émission vers le noeud récepteur,

des moyens (13, 15) pour sélectionner le bloc de code commun pour un cryptage et actionnables pour délivrer des données représentatives du bloc de code sélectionné pour une émission vers le noeud récepteur,

lesdits moyens de génération de code commun (14) étant actionnables en réponse à un changement du bloc de code commun sélectionné pour un cryptage pour modifier le bloc de code
précédemment sélectionné ;

et des moyens pour distribuer l'information cryptée, information définissant le code commun
présent, et des données représentatives du bloc de code sélectionné présent.

6. Système d'émission selon l'une quelconque des revendications précédentes, comprenant en outre des
moyens (16-22) pour crypter ledit code commun, et dans lequel lesdits moyens de distribution sont
agencés pour distribuer ledit code commun sous sa forme cryptée.

7. Système d'émission selon la revendication 6 pour distribuer une information cryptée à une pluralité de
noeuds récepteurs, dans lequel chacun desdits noeuds récepteurs est affecté d'un numéro d'adresse
individuel, et dans lequel lesdits moyens (16-22) pour crypter ledit code commun comportent des
moyens (18-22) pour générer un autre code de cryptage pour un noeud récepteur sélectionné qui est
lié au numéro d'adresse de ce noeud et un autre étage de cryptage (16) pour crypter ledit code
commun par utilisation dudit autre code de cryptage.

8. Système d'émission selon la revendication 7, dans lesdits moyens (18-22) pour générer un autre code
de cryptage comportent des moyens (18, 20, 22) pour constituer un code de cryptage de base
individuel pour chaque noeud récepteur, chaque code de cryptage de base comportant une pluralité de
fragments de code ;

d'autres moyens de sélection (19, 21) pour sélectionner le numéro et/ou l'ordre des fragments de
code d'un code de cryptage de base pour délivrer ledit autre code de cryptage et actionnables pour
délivrer des données représentatives de la sélection effectuée, lesdits moyens de distribution étant
actionnables pour distribuer les données mentionnées en dernier lieu.

9. Système d'émission selon la revendication 8, dans lequel lesdits moyens (18, 20, 22) pour délivrer
lesdits codes de cryptage de base comportent des moyens (18) mémorisant les numéros d'adresse
des noeuds récepteurs, des moyens (20) mémorisant un code de cryptage maître, et un étage de
cryptage (22) pour crypter un numéro d'adresse sélectionné avec ledit code de cryptage maître pour
obtenir le code de cryptage de base concernant ce numéro d'adresse.

10. Système d'émission selon l'une quelconque des revendications précédentes, dans lequel ladite
information qui est cryptée est audio accompagnant un signal d'image de télévision.

11. Récepteur pour une utilisation en tant que noeud récepteur avec un système d'émission selon la
revendication 1 ou la revendication 5, comportant

un étage de décryptage (24) pour décrypter une information cryptée reçue du noeud émetteur ;
des premiers moyens (26-29) pour recevoir l'information définissant ledit code commun distribué à
partir du noeud émetteur afin de délivrer ledit code commun dans le récepteur, et
des seconds moyens (27) sensibles audit code commun et auxdites données de sélection reçues
du noeud émetteur pour en tirer un code de décryptage et l'appliquer audit étage de décryptage (24)
pour récupérer l'information en clair.

12. Récepteur selon la revendication 11 pour une utilisation en tant que noeud récepteur avec un système
d'émission selon la revendication 2, dans lequel lesdits seconds moyens (27) sont sensibles auxdites
données de bloc sélectionné pour sélectionner le bloc de code correspondant à celui sélectionné dans
le système émetteur pour obtenir ledit code de décryptage.

13. Récepteur selon la revendication 11 pour une utilisation en tant que noeud récepteur avec un système
d'émission selon la revendication 4, dans lequel lesdits seconds moyens (27) sont sensibles auxdites
données de fragment sélectionnées pour sélectionner le fragment correspondant à celui sélectionné
dans le système d'émission en tant que code de décryptage.

14. Récepteur selon la revendication 11, 12 ou 13 pour une utilisation en tant que noeud récepteur avec un
système d'émission selon la revendication 6, dans lequel lesdits premiers moyens (26-29) comportent
un autre étage de décryptage (26) sensible à la réception dudit code commun crypté pour décrypter
celui-ci.

16

**15.** Récepteur selon la revendication 14 pour une utilisation en tant que noeud récepteur avec un système d'émission selon la revendication 6, dans lequel lesdits premiers moyens (26-29) comportent en outre des moyens (28) mémorisant un code individuel pour le noeud récepteur pour délivrer un code de décryptage audit autre étage de décryptage pour une récupération dudit code commun dudit code commun crypté.

**16.** Récepteur selon la revendication 15 pour une utilisation en tant que noeud récepteur avec un système d'émission selon la revendication 7, dans lequel ledit code mémorisé individuel pour le noeud récepteur comporte une pluralité de fragments de code, et lesdits premiers moyens (26-29) comportent en outre des moyens (29) sensibles aux données reçues représentatives de la sélection effectuée par lesdits autres moyens de sélection du système d'émission et actionnables pour sélectionner de façon correspondante le numéro et/ou l'ordre desdits fragments de code dudit code mémorisé pour délivrer ledit code de décryptage audit autre étage de décryptage (26).

**17.** Réseau de récepteurs pour une utilisation en tant que noeuds récepteurs avec un système d'émission selon la revendication 7, chaque récepteur comportant :

un étage de décryptage (24) pour décrypter une information cryptée reçue du noeud émetteur ;

des premiers moyens (26-29) pour recevoir du noeud émetteur un code commun crypté associé au numéro d'adresse du noeud récepteur respectif afin de délivrer ledit code commun dans le récepteur, lesdits premiers moyens (26-29) comportant un autre étage de décryptage (26) sensible à la réception dudit code commun crypté pour décrypter celui-ci ; et des moyens (28) mémorisant un code individuel pour le numéro d'adresse du noeud récepteur respectif pour délivrer un code de décryptage audit autre étage de décryptage pour une récupération dudit code commun dudit code commun crypté reçu concernant le même numéro d'adresse ; et

des seconds moyens (27) sensibles audit code commun et auxdites données de sélection reçues du noeud émetteur pour en extraire un code de décryptage et l'appliquer audit étage de décryptage (24) pour récupérer l'information en clair.

**18.** Procédé d'émission d'une information depuis un noeud émetteur vers un noeud récepteur, comportant les étapes suivantes :

sur le noeud émetteur :

générer un code commun pour une utilisation afin de coder une information devant être émise, ledit code commun comportant une pluralité de fragments de code ; coder une information par utilisation d'un code de cryptage comportant un numéro et/ou un ordre sélectionné desdits fragments de code ; et distribuer audit noeud récepteur l'information codée, information définissant ledit code commun, et des données définissant ladite sélection du numéro et/ou de l'ordre desdits fragments de code ; et

sur le noeud récepteur :

recevoir ladite information cryptée distribuée, information définissant ledit code commun et lesdites données de sélection ; et

utiliser lesdites données de sélection pour récupérer ledit code de cryptage de ladite information de code commun ; et décrypter ladite information cryptée avec ledit code de cryptage récupérer pour récupérer ladite information.

**19.** Procédé selon la revendication 18, dans lequel ledit code commun comporte deux blocs de code, dont chacun comporte des fragments de code, et le code de cryptage est extrait des fragments de code d'un bloc de code sélectionné ;

et comportant en outre la distribution audit noeud récepteur de données représentatives du bloc de code sélectionné ; et

l'application desdites données de sélection sur le noeud récepteur au bloc de code indiqué par lesdites données représentatives du bloc de code.

**20.** Procédé selon la revendication 18 ou 19, dans lequel l'information définissant ledit code commun est une forme cryptée dudit code commun.

EP 0 194 769 B1

**21.** Procédé selon la revendication 20, dans lequel se trouvent une pluralité de noeuds récepteurs affectés chacun d'un numéro d'adresse individuel, et dans lequel l'information de code commun est émise à chaque noeud récepteur en cryptant ledit code commun avec un autre code de cryptage qui est associé au numéro d'adresse de ce noeud.

**22.** Procédé selon la revendication 21, dans lequel chaque autre code de cryptage est obtenu en sélectionnant le numéro et/ou l'ordre de fragments de code d'un code de cryptage de base qui est individuel pour un noeud récepteur et qui comporte une pluralité de fragments de code, et dans lequel des données représentatives de la sélection appliquée à chaque code de cryptage de base sont émises vers les noeuds récepteurs, et dans lequel chaque noeud récepteur mémorise son code de cryptage de base et en réponse aux données de sélection concernant celui-ci, l'autre code de cryptage est extrait et est utilisé pour décrypter le code commun crypté pour le noeud récepteur de manière à obtenir ledit code commun.

**23.** Procédé selon la revendication 22, dans lequel le code de cryptage de base pour chaque noeud récepteur est obtenu en cryptant le numéro d'adresse de ce noeud récepteur avec un code de cryptage maître.

**Patentansprüche**

**1.** Sendesystem zum Senden verschlüsselter Information von einem Sendeknoten an einen Empfängerknoten, umfassend:

eine Einrichtung (14) zum Erzeugen eines gemeinsamen Schlüssels zum Gebrauch beim Verschlüsseln von zu sendender Information, wobei der gemeinsame Schlüssel eine Anzahl von Schlüsselfragmenten aufweist;

eine Einrichtung (13,15) zum Auswählen der Anzahl und/oder Reihenfolge von Schlüsselfragmenten des gemeinsamen Schlüssels, um einen Verschlüsselungs-Schlüssel abzuleiten, welche einsetzbar ist, die gegenwärtige Auswahl angebende Daten zur Verfügung zu stellen;

eine Verschlüsselungsstufe (12) zum Verschlüsseln von Information durch Gebrauch des Verschlüsselungs-Schlüssels, um verschlüsselte Information zum Senden an den Empfängerknoten zur Verfügung zu stellen; und

eine Einrichtung zum Verteilen der verschlüsselten Information an den Empfängerknoten, wobei die Information den gemeinsamen Schlüssel und die Auswahldaten bestimmt.

**2.** Sendesystem wie in Anspruch 1 beansprucht, in welchem die Einrichtung (14) zum Erzeugen des gemeinsamen Schlüssels einsetzbar ist, um den gemeinsamen Schlüssel in Form von zwei Schlüsselblöcken zu erzeugen, wobei jeder Block eine Anzahl von Schlüsselfragmenten aufweist, und in welchem die Auswahleinrichtung (13) mit einem ausgewählten Schlüsselblock der beiden Schlüsselblöcke arbeitet, um den Verschlüsselungs-Schlüssel zur Verfügung zu stellen, und in welchem die Einrichtung zur Erzeugung des gemeinsamen Schlüssels (14) einsetzbar ist, um ein Kennzeichen für den ausgewählten Block, der in den verteilten Daten enthalten ist, zur Verfügung zu stellen.

**3.** Sendesystem wie in Anspruch 2 beansprucht, in welchem die Einrichtung (14) zum Erzeugen des gemeinsamen Schlüssels einsetzbar ist, um nach einer Änderung in der Auswahl des Schlüsselblocks den vorher ausgewählten Block des gemeinsamen Schlüssels zu variieren.

**4.** Sendesystem wie in Anspruch 1 beansprucht, in welchem die Einrichtung (14) zum Erzeugen des gemeinsamen Schlüssels einsetzbar ist, um den gemeinsamen Schlüssel in Form von zwei Schlüsselfragmenten zu erzeugen und in welchem die Auswahleinrichtung (13) arbeitet, um einen der beiden Schlüsselfragmente als den gegenwärtigen Verschlüsselungs-Schlüssel auszuwählen, und wobei die Einrichtung (14) zum Erzeugen des gemeinsamen Schlüssels einsetzbar ist, um nach einer Änderung in der Auswahl des Schlüsselfragmentes das vorher ausgewählte Schlüsselfragment des gemeinsamen Schlüssels zu variieren.

18

**5.** Sendesystem zum Senden verschlüsselter Information von einem Sendeknoten zu einem Empfängerknoten, aufweisend:

eine Einrichtung (14) zum Erzeugen eines gemeinsamen Schlüssels zum Verschlüsseln von zu sendender Information, wobei der gemeinsame Schlüssel eine Anzahl von Schlüsselblöcken aufweist,

eine Verschlüsselungsstufe (12) zum Empfangen von zu sendender Information, welche von einem ausgewählten gemeinsamen Schlüsselblock zum Verschlüsseln der Information unter Verwendung des ausgewählten Schlüsselblocks abhängig ist, um so verschlüsselte Information zum Senden an den Empfängerknoten zur Verfügung zu stellen,

eine Einrichtung (13,15) zum Auswählen des gemeinsamen Schlüsselblocks zum Verschlüsseln, welche einsetzbar ist, Daten, die den zum Senden an den Empfängerknoten ausgewählten Schlüsselblock angeben, zur Verfügung zu stellen;

wobei die Einrichtung (14) zum Erzeugen des gemeinsamen Schlüssels in Abhängigkeit von einer Änderung in dem für die Verschlüsselung ausgewählten Schlüsselblock einsetzbar ist, um den vorher ausgewählten Schlüsselblock zu ändern; und

eine Einrichtung zum Verteilen der verschlüsselten Information, der den gegenwärtigen gemeinsamen Schlüssel bestimmenden Information und von Daten, die den gegenwärtig ausgewählten Schlüsselblock angeben.

**6.** Sendesystem wie in einem der vorstehenden Ansprüche beansprucht, ferner aufweisend eine Einrichtung (16-22) zum Verschlüsseln des gemeinsamen Schlüssels und in welchem die Verteilungseinrichtung angeordnet ist, um den gemeinsamen Schlüssel in seiner verschlüsselten Form zu verteilen.

**7.** Sendesystem zum Verteilen verschlüsselter Information an eine Anzahl von Empfängerknoten wie in Anspruch 6 beansprucht, in welchem jedem der Empfängerknoten eine individuelle Adresszahl zugeteilt ist, und in dem die Einrichtung (16-22) zum Verschlüsseln des gemeinsamen Schlüssels eine Einrichtung (18-22) zum Erzeugen eines weiteren Verschlüsselungs-Schlüssels für einen ausgewählten Empfängerknoten, der sich auf die Adresszahl des Knotens bezieht, und eine weitere Verschlüsselungsstufe (16) zum Verschlüsseln des gemeinsamen Schlüssels unter Gebrauch des weiteren Verschlüsselungs-Schlüssels aufweist.

**8.** Sendesystem wie in Anspruch 7 beansprucht, in welchem die Einrichtung (18-22) zum Erzeugen eines weiteren Verschlüsselungs-Schlüssels eine Einrichtung (18,20,22) zum Liefern eines Basis-Verschlüsselungs-Schlüssels, der individuell für jeden Empfängerknoten ist, wobei jeder Basis-Verschlüsselungs-Schlüssel eine Anzahl von Schlüsselfragmenten umfaßt, sowie eine weitere Auswahleinrichtung (19,21) zum Auswählen der Anzahl und/oder der Reihenfolge von Schlüsselfragmenten eines Basis-Verschlüsselungs-Schlüssels aufweist, um den weiteren Verschlüsselungs-Schlüssel zur Verfügung zu stellen und um einsetzbar zu sein, Daten zur Verfügung zu stellen, die die ausgeführte Auswahl angeben, wobei die Verteilungseinrichtung einsetzbar ist, die letztgenannten Daten zu verteilen.

**9.** Sendesystem nach Anspruch 8, in welchem die Einrichtung (18,20,22) zum Liefern der Basis-Verschlüsselungs-Schlüssel eine Einrichtung (18), die die Adresszahlen der Empfängerknoten speichert, eine Einrichtung (20), die einen Hauptverschlüsselungs-Schlüssel speichert, und eine Verschlüsselungsstufe (22) zum Verschlüsseln einer ausgewählten Adresszahl mit dem Hauptverschlüsselungs-Schlüssel, um den Basis-Verschlüsselungs-Schlüssel zu gewinnen, der zu der Adresszahl gehört, aufweist.

**10.** Sendesystem wie in irgendeinem der vorstehenden Ansprüche beansprucht, in welchem die Information, die verschlüsselt wird, ein ein Fernsehbildsignal begleitendes Tonsignal ist.

**11.** Empfänger zum Gebrauch als Empfängerknoten zusammen mit einem Sendesystem wie in Anspruch 1 oder Anspruch 5 beansprucht, aufweisend:

19

eine Entschlüsselungsstufe (24) zum Entschlüsseln von dem Senderknoten empfangener verschlüsselter Information;

eine erste Einrichtung (26-29) zum Empfangen der den gemeinsamen Schlüssel, der von dem Sendeknoten verteilt wird, um den gemeinsamen Schlüssel in dem Empfänger zur Verfügung zu stellen, bestimmenden Information, und

eine zweite Einrichtung (27), die von dem von dem Sendeknoten empfangenen gemeinsamen Schlüssel und von den Auswahldaten abhängt, um davon einen Entschlüsselungs-Schlüssel abzuleiten, und um denselben auf die Entschlüsselungsstufe (24) anzuwenden, um die Information als Klartext wiederzugewinnen.

12. Empfänger wie in Anspruch 11 beansprucht, zum Gebrauch als ein Empfangsknoten zusammen mit einem Sendesystem wie in Anspruch 2 beansprucht, in welchem die zweite Einrichtung (27) von den ausgewählten Blockdaten abhängt, um den Schlüsselblock, der demjenigen in dem Sendesystem entspricht, auszuwählen, um den Entschlüsselungs-Schlüssel zu gewinnen.

13. Empfänger wie in Anspruch 11 beansprucht, zum Gebrauch als Empfängerknoten zusammen mit einem Sendesystem wie in Anspruch 4 beansprucht, in welchem die zweite Einrichtung (27) von den ausgewählten Fragmentdaten abhängt, um das Fragment, das dem in dem Sendesystem ausgewählten Fragment entspricht, als Entschlüsselungs-Schlüssel auszuwählen.

14. Empfänger wie in Anspruch 11, 12 oder 13 beansprucht, zum Gebrauch als ein Empfängerknoten zusammen mit einem Sendesystem wie in Anspruch 6 beansprucht, in welchem die erste Einrichtung (26-29) eine weitere Entschlüsselungsstufe (26) aufweist, die von der Entgegennahme des verschlüsselten gemeinsamen Schlüssels abhängt, um denselben zu entschlüsseln.

15. Empfänger wie in Anspruch 14 beansprucht, zum Gebrauch als ein Empfängerknoten zusammen mit einem Sendesystem wie in Anspruch 6 beansprucht, in welchem die erste Einrichtung (26-29) ferner eine Einrichtung (28) aufweist, welche einen Schlüssel speichert, der individuell für den Empfängerknoten ist, um der weiteren Entschlüsselungsstufe einen Entschlüsselungs-Schlüssel zum Wiedergewinnen des gemeinsamen Schlüssels aus dem verschlüsselten gemeinsamen Schlüssel zur Verfügung zu stellen.

16. Empfänger, wie in Anspruch 15 beansprucht, zum Gebrauch als ein Empfängerknoten zusammen mit einem Sendesystem wie in Anspruch 7 beansprucht, in welchem der für den Empfängerknoten individuelle gespeicherte Schlüssel eine Anzahl von Schlüsselfragmenten aufweist, und in welchem die erste Einrichtung (26-29) ferner eine Einrichtung (29) aufweist, die von den empfangenen Daten abhängt, die die Auswahl angeben, die durch die weitere Auswahleinheit des Sendesystems durchgeführt ist, und die einsetzbar ist, die Anzahl oder die Reihenfolge der Schlüsselfragmente des gespeicherten Schlüssels entsprechend auszuwählen, um den Entschlüsselungs-Schlüssel für die weitere Entschlüsselungsstufe (26) zur Verfügung zu stellen.

17. Netzwerk von Empfängern zum Gebrauch als entsprechende Empfängerknoten zusammen mit einem Sendesystem wie in Anspruch 7 beansprucht, wobei jeder Empfänger aufweist:

eine Entschlüsselungsstufe (24) zum Entschlüsseln von dem Sendeknoten empfangener verschlüsselter Information,

eine erste Einrichtung (26-29), um von dem Sendeknoten einen verschlüsselten gemeinsamen Schlüssel, der auf die Adresszahl des entsprechenden Empfängerknotens bezogen ist, zu empfangen, um den gemeinsamen Schlüssel in dem Empfänger zur Verfügung zu stellen, wobei die erste Einrichtung (26-29) eine weitere Entschlüsselungsstufe (26), die von der Aufnahme des verschlüsselten gemeinsamen Schlüssels abhängt, um denselben zu entschlüsseln, und eine Einrichtung (28), die einen Schlüssel speichert, der individuell für die Adresszahl des entsprechenden Empfängerknotens ist, aufweist, um der weiteren Entschlüsselungsstufe einen Entschlüsselungs-Schlüssel zur Wiedergewinnung des gemeinsamen Schlüssels aus dem empfangenen verschlüsselten gemeinsamen Schlüssel, der auf die gleiche Adresszahl bezogen ist, zur Verfügung zu stellen; und

eine zweite Einrichtung (27), die von dem gemeinsamen Schlüssel und von den von dem Senderknoten empfangenen Auswahldaten abhängt, um einen Entschlüsselungs-Schlüssel davon abzuleiten, und um denselben auf die Entschlüsselungsstufe (24) anzuwenden, um die Information im Klartext wiederzugewinnen.

18. Verfahren zum Senden von Information von einem Senderknoten an einen Empfängerknoten, aufweisend die folgenden Schritte:

beim Senderknoten:-
Erzeugen eines gemeinsamen Schlüssels zum Gebrauch beim Verschlüsseln von zu sendender Information, wobei der gemeinsame Schlüssel eine Anzahl von Schlüsselfragmenten aufweist;

Verschlüsseln von Information durch Gebrauch eines Verschlüsselungs-Schlüssels, der eine ausgewählte Anzahl und/oder Reihenfolge von den Schlüsselfragmenten aufweist; und

Verteilen der verschlüsselten Information an den Empfängerknoten, wobei die Information den gemeinsamen Schlüssel und die Auswahl der Anzahl und/oder Reihenfolge der Schlüsselfragmente bestimmender Daten festlegt; und

beim Empfängerknoten:-
Empfangen der verteilten verschlüsselten Information, wobei die Information den gemeinsamen Schlüssel und die Auswahldaten festlegt; und

Gebrauch der Auswahldaten, um den Verschlüsselungs-Schlüssel aus der Information des gemeinsamen Schlüssels wiederzugewinnen; und

Entschlüsseln der verschlüsselten Information mit dem wiedergewonnenen Verschlüsselungs-Schlüssel, um die Information wiederzugewinnen.

19. Verfahren wie in Anspruch 18 beansprucht, in welchem der gemeinsame Schlüssel zwei Schlüsselblöcke umfaßt, von denen jeder Schlüsselfragmente aufweist, und wobei der Verschlüsselungs-Schlüssel aus den Schlüsselfragmenten eines ausgewählten Schlüsselblocks abgeleitet ist;

und ferner aufweisend:

Verteilen von Daten, die den ausgewählten Schlüsselblock angeben, an den Empfängerknoten; und

Anwenden der Auswahldaten beim Empfängerknoten auf den Schlüsselblock, der durch die den Schlüsselblock angebenden Daten angezeigt wird.

20. Verfahren wie in den Ansprüchen 18 oder 19 beansprucht, in welchem die den gemeinsamen Schlüssel bestimmende Information eine verschlüsselte Form des gemeinsamen Schlüssels darstellt.

21. Verfahren wie in Anspruch 20 beansprucht, in welchem es eine Anzahl von Empfängerknoten gibt, denen jeweils eine individuelle Adresszahl zugeteilt ist, und in welchem die Information des gemeinsamen Schlüssels an jeden Empfängerknoten durch Verschlüsseln des gemeinsamen Schlüssels mit einem weiteren Verschlüsselungs-Schlüssel, der auf die Adresszahl des Knotens bezogen ist, gesendet wird.

22. Verfahren wie in Anspruch 21 beansprucht, in welchem jeder weitere Verschlüsselungs-Schlüssel durch Auswählen der Anzahl und/oder Reihenfolge von Schlüsselfragmenten eines Basis-Verschlüsselungs-Schlüssels gewonnen wird, welcher individuell für einen Empfängerknoten ist, und welcher eine Anzahl von Schlüsselfragmenten aufweist, und in welchem Daten, die die auf jeden Basis-Verschlüsselungs-Schlüssel angewandte Auswahl angeben, zu den Empfängerknoten gesendet werden, und in welchem jeder Empfängerknoten seinen Basis-Verschlüsselungs-Schlüssel speichert und in welchem in Abhängigkeit von den dazugehörigen Auswahldaten der weitere Verschlüsselungs-Schlüssel abgeleitet wird und benutzt wird, um den verschlüsselten gemeinsamen Schlüssel für den Empfängerknoten zu entschlüsseln, um so den gemeinsamen Schlüssel zu gewinnen.

23. Verfahren wie in Anspruch 22 beansprucht, in welchem der Basis-Verschlüsselungs-Schlüssel für jeden Empfängerknoten durch Verschlüsseln der Adresszahl des Empfängerknotens mit einem Hauptverschlüsselungs-Schlüssel gewonnen wird.

# F I G. 1

# F I G. 2

ENCRYPTED AUDIO (FROM HBI) → **AUDIO STREAM DECRYPT** (24) → CLEAR AUDIO

PERMUTED KEY

CONTROL / ENCRYPTION KEY NUMBER (FROM HEADER PACKET) → **COMMON AUDIO KEY FRAGMENT SET SELECT CIRCUIT** (27)

COMMON AUDIO KEY

BLOCK A / BLOCK B

ENCRYPTED COMMON AUDIO KEY (FROM ADDRESSED PACKET) → **BLOCK CYPHER ALGORITHM** (26)

SUBSCRIBER CRYPTOGRAPHIC KEY

CONTROL / SIGNATURE TYPE CODE (FROM ADDRESSED PACKET) → **SIGNATURE KEY FRAGMENT SET SELECT** (29)

**SUBSCRIBER UNIT SIGNATURE KEY MEMORY** (28)

# F I G. 3

SUBSCRIBER
UNIT
ADDRESS
GENERATOR                    18

UNIT
ADDRESS

DATA
ENCRYPTION
STANDARD
CIRCUIT                      22

MASTER
KEY

MASTER
FACTORY
KEY
MEMORY                       20

TRANSMISSION
UNIT

SUBSCRIBER
UNIT
ADDRESS
MEMORY                       32

SUBSCRIBER
UNIT
SIGNATURE
KEY
MEMORY                       28

RECEIVING
UNIT

# F I G. 4

| ACTIVE VIDEO | SYNC | HBI | ACTIVE VIDEO | SYNC | HBI | ACTIVE VIDEO | SYNC | HBI |

| RUN IN CODE | ADDRESSABLE DATA STREAM | ENCRYPTED AUDIO SIGNALS | OTHER | |

HEADER
(GROUP ADDRESS)
NUMBER
(PROGRAM RELATED)
INFORMATION

| ADDRESSED PACKET | 1 |

| ADDRESSED PACKET | 2 |

| ADDRESSED PACKET | 12 |

| SUBSCRIBER UNIT ADDRESS |
| ENCRYPTED COMMON AUDIO KEY |

| SUBSCRIBER UNIT ADDRESS |
| SIGNATURE TYPE CODE |

EP 0 194 769 B1